# EUROPEAN PATENT APPLICATION

(11) **EP 2 439 082 A2**
(43) Date of publication of application: **11.04.2012**
(21) Application number: 11183928.8
(22) Date of filing: 05.10.2011
(51) Int. Cl.: B60C 9/18, B60C 15/06, B60C 9/00

(54) **A tire with a metallic belt reinforcement**

(30) Priority: 07.10.2010 US 899846
(71) Applicant: The Goodyear Tire & Rubber Company, Akron, OH 44316-0001 (US)
(72) Inventor: Assaad, Mahmoud Cherif, Copley, OH Ohio 44321 (US)
(74) Representative: Kutsch, Bernd

(57) **Abstract**

A tire comprising a carcass (22) having at least one reinforced ply (14), a tread (12) disposed radially outward of the carcass (22), and a belt structure (16) disposed radially between the carcass (22) and the tread (12) is disclosed. The belt structure comprises a layer (200) of crimped metallic cords (210). Also, a method of manufacturing such a tire is disclosed. The method comprises forming the belt structure (16) as an annular ring and slipping over or appling the belt structure (16) over the carcass (22) in a one step process.

## Description

### Field of the Invention

The present invention relates to a tire, and more particularly, to a radial runflat passenger tire or a high performance tire with low rolling resistance and high durability, and to a method of manufacturing such a tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply. A belt structure is typically disposed between the carcass ply and the tread rubber.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of structural design approaches have been used to control separation of tire elements in the bead regions of a tire. For example, one method has been to provide a "flipper" surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

In addition to the use of flippers as a means by which to reduce the tendency of a ply to separate, or as an alternative, another method that has been used involves the placement of "chippers." A chipper is a circumferentially deployed metal or fabric layer that is disposed within the bead region in the portion of the tire where the bead fits onto the wheel rim. More specifically, the chipper lies inward of the wheel rim (i.e., toward the bead) and outward (i.e., radially outward, relative to the bead viewed in cross section) of the portion of the ply that turns upward around the bead. Chippers serve to stiffen, and increase the resistance to flexure of, the adjacent rubber material, which itself is typically adjacent to the turnup ply endings.

### Summary of the Invention

The invention relates to a tire in accordance with claim 1 and to a method in accordance with claim 15.

Dependent claims refer to preferred embodiments of the invention.

A pneumatic tire in accordance with a preferred embodiment of the present invention includes a carcass having at least one reinforced ply, a tread disposed radially outward of the carcass, and a belt structure disposed radially between the carcass and the tread. The belt structure includes a single woven layer of crimped metallic cords extending in the radial or axial direction and in the circumferential direction. Instead of a woven layer, a crimped layer may be used which is however more difficult to manufacture and apply.

In one aspect of the present invention, the crimped metallic cords have crimp angles between 10°- and 60°-.

In another aspect of the present invention, the crimped metallic cords have straight lengths between the crimp angles. The straight lengths are between 0.8 mm and 20.0 mm.

In still another aspect of the present invention, the woven layer has between 10 epi to 18 epi (ends per 2.54 cm).

In yet another aspect of the present invention, the crimped metallic cords each comprise a monofilament.

In still another aspect of the present invention, the crimped metallic cords each comprise twisted metallic filaments.

In yet another aspect of the present invention, the tire is a pneumatic tire such as a radial runflat passenger tire.

In still another aspect of the present invention, the tire is a pneumatic high performance tire.

In yet another aspect of the present invention, the crimped metallic cords are constructed of steel.

In still another aspect of the present invention, the crimped metallic cords are constructed of titanium, aluminum, or a metallic alloy comprising for instance at least one element selected from the group consisting of Fe, Cu, Al, Zn, Sn and Ti.

### Definitions

"Apex" means an elastomeric filler located radially above the bead core and between the plies and the turnup ply.

"Annular" means formed like a ring.

"Axial" and "axially" are used herein to refer to lines or directions that are parallel to the axis of rotation of the tire.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one of the reinforcement strands which a reinforcement structure of a tire comprises.

"Cord angle" means the acute angle, left or right in a plan view of the tire, formed by a cord with respect to the equatorial plane. The "cord angle" is measured in a cured but uninflated tire.

"Fiber" is a unit of matter, either natural or man-made that forms the basic element of filaments.

"Radial" and "radially" are used to mean directions radially toward or away from the axis of rotation of the tire.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1;
FIG. 3 represents a schematic detail view of another bead region for use with present invention;
FIG. 4 represents a schematic detail of an example weave in accordance with the present invention; and
FIG. 5 represents a schematic detail of an example technique in accordance with the present invention.

### Detailed Description of an Example Embodiment

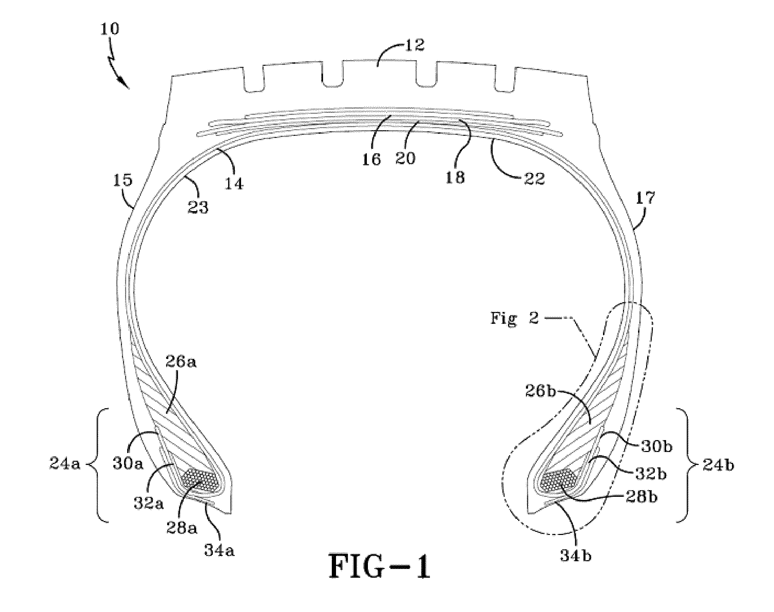

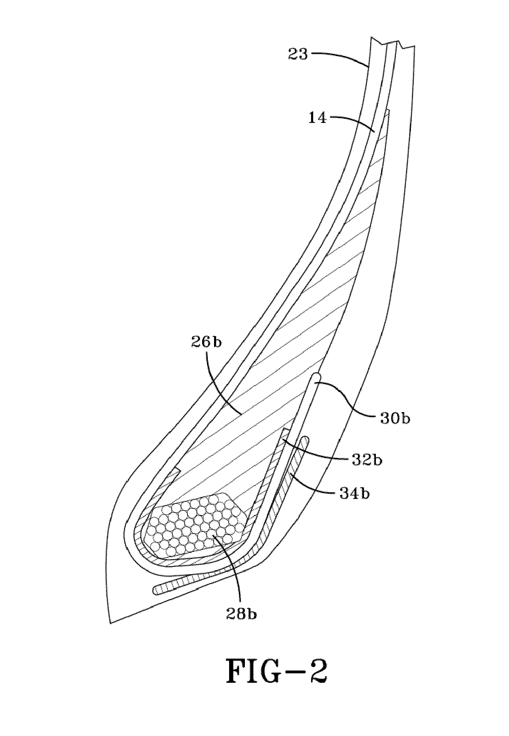

FIG. 1 shows an example tire 10 for use with a reinforcing structure in accordance with the present invention. The example tire 10 has a tread 12, an inner liner 23, a belt structure 16 comprising belts 18, 20, a carcass 22 with a preferably single carcass ply 14, two sidewalls 15,17, and two bead regions 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 engages the axial outer surfaces of two flippers 32a, 32b.

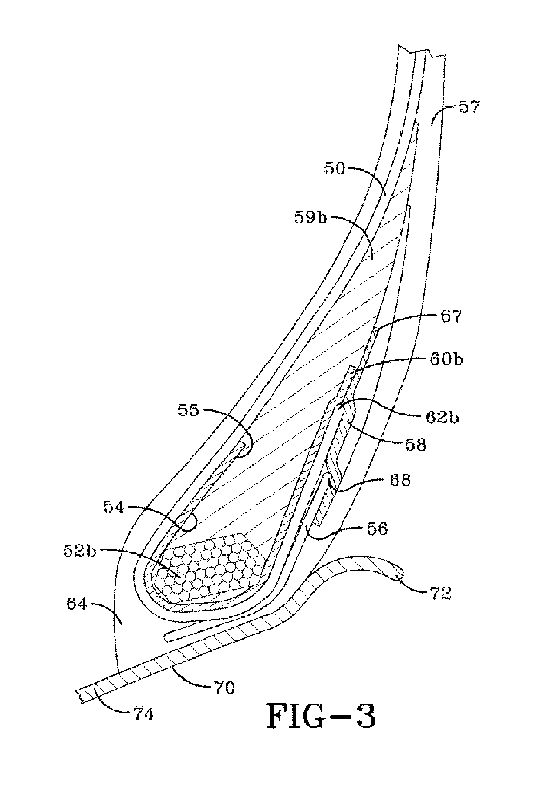

FIG. 3 shows, in cross-sectional view, the bead region of another example tire for use with a reinforcing structures in accordance with the present invention. A carcass ply 50 wraps around a bead 52b and is separated from the bead by a flipper 54. The flipper 54 may be a layer of LENO weave fabric disposed around the bead 52b and inward of a portion of the carcass ply 50 which turns up under the bead. The LENO weave fabric flipper 54 may have physical properties (such as shearing modulus of elasticity) intermediate to those of a rigid metal bead 52b and a less rigid carcass ply 50. The LENO weave fabric flipper 54 therefore may serve as an active strain-relieving layer separating the bead 52b from the carcass ply 50. The carcass ply 50 may be reinforced with metal, as is conventional in the tire art.

The example tire of FIG. 3 also may have a LENO weave fabric chipper 56 located in the bead area for reinforcing the bead area and stabilizing the axially inwardmost part of the sidewall 57. The LENO weave flipper 54 and chipper 56, along with the patch 58 uniting them, are discussed separately below, and then in operational conjunction with one another.

The LENO weave fabric flipper 54 wraps around the bead 52b and extends radially outward into the sidewall regions of the example tire. The axially inward portion 55 of LENO weave fabric flipper 54 terminates within the bead-filler apex 59b. The axially outward portion 60b of the LENO weave fabric flipper 54 lies radially beyond a turnup end 62b, which itself is located radially beyond the radially outermost reach of the chipper 56 (discussed separately below). The axially outwardmost portions 62b of the turnup end 62b of the carcass ply 50 may extend radially outward about 15-30 millimeters beyond the top of a wheel rim flange 72 of a wheel rim 70.

As shown in FIG. 3, the LENO weave fabric flipper 54 is deployed about the bead 52b which is itself circumferentially disposed within the example tire. An axially inward portion 55 of the LENO weave fabric flipper 54 extends radially outward from the bead 52b to a location approximately axially adjacent to the top of the wheel rim flange 72 of the wheel rim 70. On an axially outward side, the LENO weave fabric flipper 54 extends radially outward from the bead 52b to an end 60b above the wheel rim flange 72. The radially outermost reach of the end 60b of the LENO weave fabric flipper 54 may extend between about 7-15 millimeters beyond the radially outermost reach of the turnup end 62b. The LENO weave fabric flipper 54 may be termed "active" because it actively absorbs (i.e. during tire deflection) differential strains between the relatively rigid bead 52b and the relatively less rigid carcass ply 50.

The LENO weave fabric chipper 56 is disposed adjacent to the portion of the carcass ply 50 that is wrapped around the bead 52b. More specifically, the LENO weave fabric chipper 56 is disposed on the opposite side of the portion of the carcass ply 50 from the LENO weave fabric flipper 54. The axially inwardmost portion of the LENO weave fabric chipper 56 lies in the portion of the bead region that, when the tire is mounted on the wheel rim 70, would lie closest to a circularly cylindrical part 74 of the wheel rim. The axially and radially outwardmost portion of the LENO weave fabric chipper 56 lies in the portion of the bead region that, when the tire is mounted on the wheel rim 70, would lie axially inward of the circular portion of the wheel rim 70, being separated from the circular portion of the wheel rim by tire rubber such as a toe guard 64.

In other words, as can be seen in FIG. 3, the LENO weave fabric chipper 56 is disposed circumferentially about the radially inwardmost portion of the carcass ply 50 where the carcass ply turns up under the bead 52b. The LENO weave fabric chipper 56 may extend radially outward, being more or less parallel with the turned up end 62b of the carcass ply 50.

The LENO weave fabric chipper 56 protects the portion of the carcass ply 50 that wraps around the bead 52b from the strains in the rubber that separates the LENO weave fabric chipper from the wheel rim 70. The LENO weave fabric chipper 56 reinforces the bead area and stabilizes the radially inwardmost part of the sidewall 57. In other words, the LENO weave fabric chipper 56 may absorb deformation in a way that minimizes the transmission of stress-induced shearing strains that arise inward from the wheel rim 70, through the toe guard 64, to the turned up portion 62b of the carcass ply 50, where the LENO weave fabric chipper is most immediately adjacent to the rigid bead 52b.

The patch 58 shown in FIG. 3 is circumferentially disposed about the bead 52b in such a way as to overlie the radially outermost regions 68 of the chipper 56 and the turned up ends 62b of the carcass ply 50. The patch 58 performs a function similar to that of those of the LENO weave fabric chipper 56 and the active LENO weave fabric flipper 54. More specifically, the patch 58 may absorb shearing stresses in the rubber parts which might otherwise induce separation of the flexible rubber from the less flexible material of the LENO weave fabric chipper 56 and the carcass ply 50. The patch 58 may, for example, be made of nylon fabric. The radially outwardmost portion 67 of the patch 58 may reach to a minimum level such as extending by at least 5 mm above the upper end 60b of the flipper 54, and preferably 10-15 mm above. The radially inwardmost portion of the patch 58 may overlap about 10 mm with the LENO weave fabric chipper 56.

The net effect of the incorporation of the LENO weave fabric flipper 54 and the LENO weave fabric chipper 56 is to provide strain buffers that relieve or absorb differential shearing strains that otherwise, were the flippers and chippers not present, could lead to separation of the adjacent materials that have disparate shearing moduli of elasticity. Furthermore, this reinforced construction may increase durability of the tire by means of the incorporation of a smaller number of components than for standard constructions with gum strips.

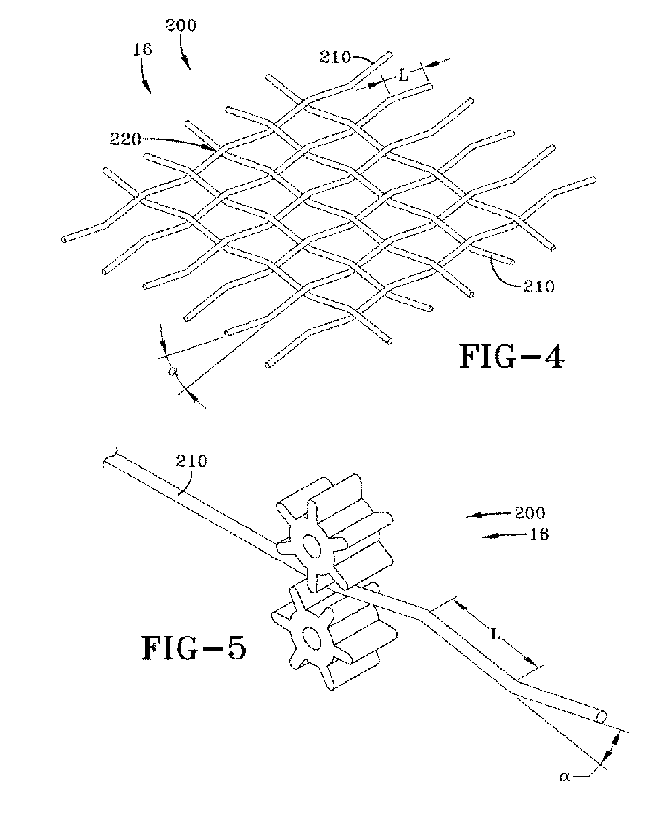

In accordance with the present invention, the belts 18, 20 of the conventional belt structure 16 are replaced with a preferably single woven structure 200 of crimped metal cords 210 (Fig. 4). The metal may be steel, titanium, or any other suitable metal or alloy. The woven structure 200 may reduce tire rolling resistance and improve tire durability by replacing the classical two belts 18, 20 with a thinner single woven metal structure 200. The cords 210 may be either monofilaments or twisted cords made of multiple filaments. The cords may be crimped, with the crimp configuration being optimized (length and angle) to reproduce appropriate shear and circumferential stiffness. The structure 200 may also be a knitted structure.

Analysis of the structural and thermal response of the structure 200 has revealed tire radial stiffness similar to the dual belts 18, 20. Socketing was dissipated along the length of the intersecting cords 210. Rubber gauge of the belt structure 16 was reduced, thus markedly improving tire rolling resistance. The crimp configuration may have straight lengths L of between 0.8 mm and 20.0 mm and crimp angles α of between 10° and 60° (Figs. 4 and 5).

Further, an annular ring of the woven steel belt may be formed such that the woven structure 200 may slip over or is applied over the carcass 14 in a one step process. This improves efficiency and cost compared to conventionally building and cutting two plies (18, 20) in opposite directions to form an opposed belt angle structure. A tire with the structure 200 in accordance with the present invention may thus dissipate strain energy at the edges of the structure at the juncture points 220 of the woven structure.

The structure 200 may be treated with an adhesion promoter, such as brass. The selection of materials for the adhesion promoter may depend upon the materials selected for use in the tire.

As stated above, a structure 200 in accordance with the present invention produces excellent rolling resistance performance and durability in a pneumatic tire 10. This structure 200 thus enhances the performance of the pneumatic tire 10, even though the complexities of the structure and behavior of the pneumatic tire are such that no complete and satisfactory theory has been propounded.

A pneumatic tire has certain essential structural elements. An important structural element is the belt structure, typically made up of many flexible, high modulus cords of natural textile, synthetic polymer, glass fiber, or fine hard drawn steel embedded in, and bonded to, a matrix of low modulus polymeric material, usually natural or synthetic rubber. The flexible, high modulus cords are usually disposed as a single layer. Tire manufacturers throughout the industry cannot predict the effect of different twists of belt ply cords on noise characteristics, handling, durability, comfort, etc. in pneumatic tires.

Thus, for example, when the structure (i.e., twist, cord construction, weave, etc.) of the belt ply or plies of a pneumatic tire is modified with the intent to improve one functional property of the pneumatic tire, a number of other functional properties may be unacceptably degraded. Furthermore, the interaction between the belt ply and the apex, carcass, and tread may also unacceptably affect the functional properties of the pneumatic tire. A modification of the belt ply or plies may not even improve that one functional property because of these complex interrelationships.

Thus, as stated above, the complexity of the interrelationships of the multiple components makes the actual result of modification of a belt ply, in accordance with the present invention, impossible to predict. Only through extensive experimentation have the woven structure 200 of the present invention been revealed as an excellent option for a tire belt.

## Claims

1. A tire comprising a carcass (22) having at least one reinforced ply (14), a tread (12) disposed radially outward of the carcass (22), and a belt structure (16) disposed radially between the carcass (22) and the tread (12), **characterized in that** the belt structure comprises a layer (200) of crimped metallic cords (210).

2. The tire of claim 1 wherein the belt structure has only a single a layer (200) of crimped metallic cords (210).

3. The tire of claim 1 or 2 wherein the belt structure consists of a single a layer (200) of crimped metallic cords (210).

4. The tire of at least one of the previous claims wherein the layer (200) of crimped metallic cords (210) is a woven layer (200) of crimped metallic cords (210).

5. The tire of at least one of the previous claims wherein the layer (200) of crimped metallic cords (210) is a knitted layer (200) of crimped metallic cords (210).

6. The tire of at least one of the previous claims wherein the crimped metallic cords (210) extend in a first direction and a second direction making an angle with the first direction, the angle being in the range of from 30 degrees to 90 degrees, preferably 60 to 90 degrees or 90 degrees.

7. The tire of at least one of the previous claims wherein the crimped metallic cords (210) extend in the axial direction of the tire and in the circumferential direction of the tire.

8. The tire of at least one of the previous claims wherein the crimped metallic cords (210) have crimp angles (α) between 10° and 60°.

9. The tire of claim 8 wherein the crimped metallic cords (8) have straight lengths (L) between the crimp angles (α), the straight lengths being in a range of from 0.8 mm and 20.0 mm or from 3 mm to 10 mm.

10. The tire of at least one of the previous claims wherein the layer (200) of crimped metallic cords (210) has from 10 ends per 2.54 cm (epi) to 18 ends per 2.54 cm.

11. The tire of at least one of the previous claims wherein the crimped metallic cords (210) each comprise a monofilament or consist of a monofilament.

12. The tire of at least one of the previous claims wherein the crimped metallic cords (210) each comprise twisted metallic filaments.

13. The tire of at least one of the previous claims wherein the tire is a pneumatic tire, preferably a radial runflat passenger tire or a high performance tire.

14. The tire of at least one of the previous claims wherein wherein the crimped metallic cords (210) are constructed of steel, aluminum or of titanium.

15. A method of manufacturing a tire, particularly a tire in accordance with at least one of the previous claims, the method comprising:
providing a tire carcass (22) having at least one reinforced ply (14);
providing a belt structure (16) comprising a layer (200) of crimped metallic cords (210);
disposing the belt structure (16) radially outside of the carcass (22);
providing a tread (12);
disposing the tread (12) radially outside of the belt structure (16);
wherein the belt structure (16) is formed as an annular ring and slipped over or applied over the carcass (22) in a one step process for disposing the belt structure (16) radially outside of the carcass (22).
